Europäisches Patentamt

European Patent Office

Office européen des brevets

(19)

(11) Numéro de publication: **0 319 367**

**A1**

## (12) DEMANDE DE BREVET EUROPEEN

(21) Numéro de dépôt: **88402901.8**

(22) Date de dépôt: **18.11.88**

(51) Int. Cl.⁴: **B 62 D 55/21**
**B 62 D 55/205**

(30) Priorité: **30.11.87 FR 8716553**

(43) Date de publication de la demande:
**07.06.89 Bulletin 89/23**

(84) Etats contractants désignés:
**BE DE ES GB IT LU NL SE**

(71) Demandeur: **HUTCHINSON**
**2 rue Balzac**
**F-75008 Paris (FR)**

(72) Inventeur: **Lecour, Pierre**
**59, Avenue C. Gide**
**F-94270 Le Kremlin-Bicetre (FR)**

(74) Mandataire: **Orès, Bernard et al**
**Cabinet ORES 6, Avenue de Messine**
**F-75008 Paris (FR)**

(54) **Dispositif de connecteur élastique articulé pour chenille de véhicule.**

(57) Dispositif de connecteur élastique articulé pour chenille de véhicule.

Les moyens d'articulation élastiques (43, 44) des maillons (10) de la chenille sont disposés dans les connecteurs (20, 21) et sont avantageusement du type conique, c'est-à-dire ménagés par des blocs (43, 44) de caoutchouc ou matériau élastomère analogue de forme générale tronconique.

Application : chenille de véhicule à moteur, à usage civil ou militaire, notamment char de combat.

FIG. 4

EP 0 319 367 A1

tion, on prévoit de constituer les moyens d'articulations élastiques de manière à leur conférer des rigidités radiales hétérogènes.

Une telle disposition permet, par exemple en choisissant une rigidité suivant l'axe de la chenille plus grande que celle suivant la perpendiculaire à cette direction, de limiter les variations de longueur de la chenille en cas de variation de l'effort de tension, tout en maintenant à une faible valeur l'effort induit par le passage des galets qui coopèrent avec la chenille sur les connecteurs lors d'un franchissement d'obstacle.

Dans un mode d'exécution de cette réalisation, les moyens d'articulations élastiques à blocs de caoutchouc, ou matériau élastomère analogue, ne règnent pas sur la totalité de la circonférence de l'axe d'assemblage des maillons, ou des saillies qui en tiennent lieu, mais sur une partie seulement de cette circonférence, par exemple des secteurs angulaires d'amplitude prédéterminée.

Quel que soit le mode de réalisation, l'invention prévoit aussi d'associer au connecteur perfectionné qu'elle propose des moyens destinés à s'opposer à la désolidarisation du connecteur et des maillons en case de rupture ou d'endommagement des articulations en caoutchouc ou matériau élastomère analogue.

D'autres caractéristiques et avantages de l'invention apparaîtront de la description qui suit, faite à titre d'exemple et en référence au dessin annexé dans lequel :

    la figure 1 est une vue schématique, en perspective, d'une partie de chenille équipée de connecteurs selon l'invention ;

    la figure 2 est une vue schématique en plan correspondante ;

    la figure 3 est une vue de face d'un connecteur extérieur perfectionné selon la présente invention;

    la figure 4 est une vue en coupe selon la ligne 4-4 de la figure 3 avec, en outre, les moyens de montage d'un connecteur perfectionné sur un maillon de chenille ;

    la figure 5 est une vue en coupe d'un connecteur central ;

    la figure 6 illustre schématiquement une autre réalisation d'assemblage des maillons d'une chenille selon l'invention ;

    la figure 7 est une vue schématique illustrant une variante de réalisation.

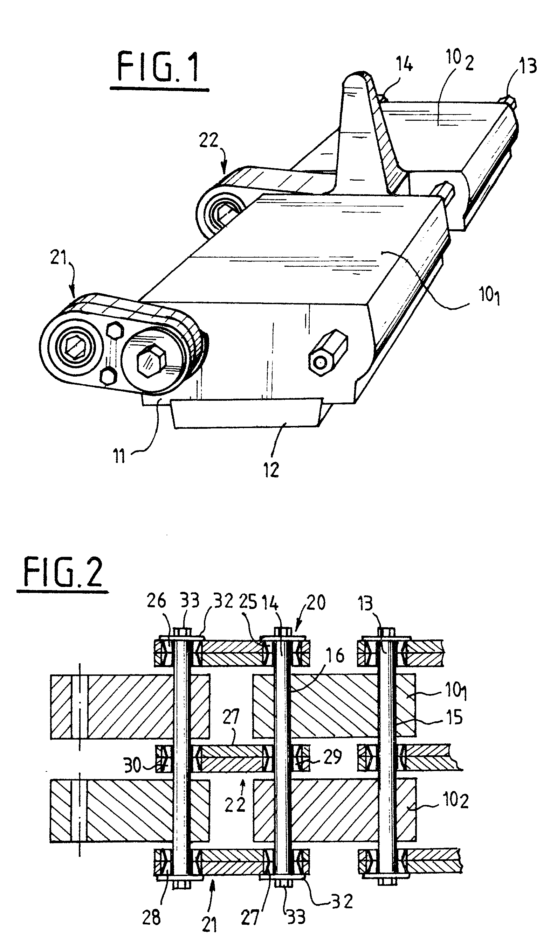

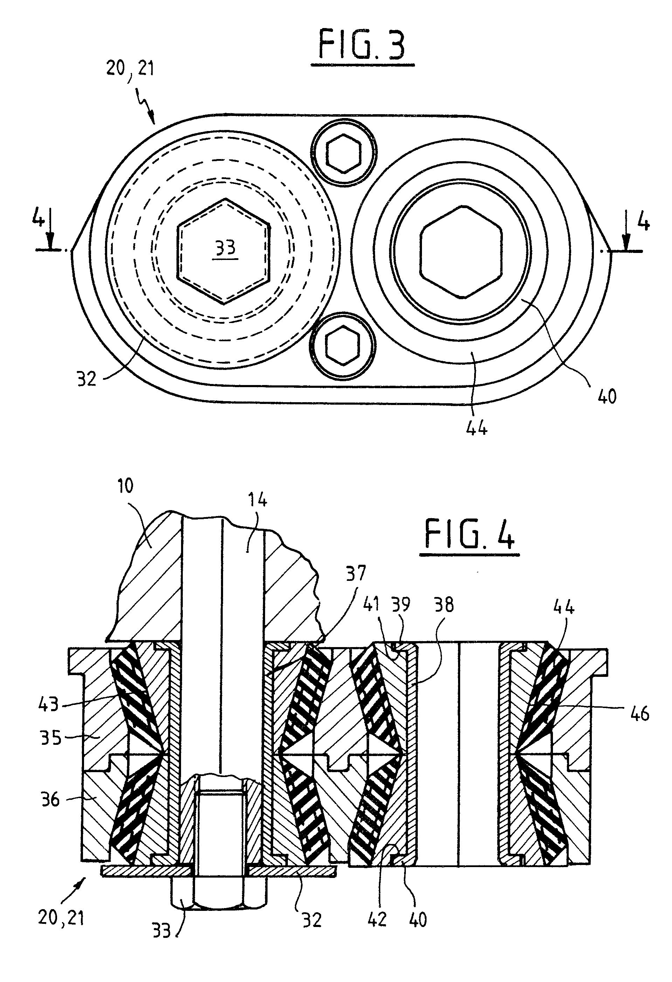

On se réfère d'abord aux figures 1 et 2 qui illustrent la structure d'une chenille perfectionnée selon l'invention. Celle-ci comprend des maillons de chenille $10_1$, $10_2$, juxtaposés, dont chacun est garni sur sa face externe 11 destinée à venir au contact du sol d'un patin de caoutchouc 12 et qui sont assemblés par des axes 13 et 14 introduits dans des forages traversants 15 et 16 des maillons, les axes étant reliés entre eux au moyen de connecteurs extérieurs 20 et 21 et d'un connecteur central 22.

Selon l'invention, les moyens d'articulations élastiques en caoutchauc ou matériau élastomère analogue sont prévus dans les connecteurs extérieurs 20, 21 au moins et, de préférence, à la fois dans les connecteurs extérieurs et dans le connecteur central 22, comme montré schématiquement en 25, 26, 27 et 28 pour les connecteurs 20 et 21, respectivement, et en 29 et 30 pour le connecteur central 22.

Dans une première réalisation, les axes 13 et 14 sont avantageusement à section droite hexagonale et le maintien de l'ensemble est assuré par des moyens comme une plaque 32 enfermant les articulations en caoutchouc et maintenue sur les axes 13 et 14 à l'aide d'un boulon ou goujon fileté 33, garantissant ainsi la sécurité en cas d'endommagement accidentel d'un élément en caoutchouc. Une telle réalisation permet un démontage et remontage aisé de la chenille, en éliminant notamment l'outillage spécial requis pour l'emmanchement à force des axes à garniture de caoutchouc des dispositifs antérieurs, tout en permettant une mise en compression des maillons $10_1$, et $10_2$ et des connecteurs qui les relient par l'intermédiaire des axes 13 et 14.

Dans une autre forme de réalisation, non représentée, l'invention s'applique à une chenille dont les maillons sont analogues à ceux représentés et décrits ci-dessus, démunis de forages traversants comme 15 et 16 mais comprenant par contre sur leurs faces latérales des saillies destinées à la fixation des connecteurs. Une telle réalisation, qui permet d'augmenter l'épaisseur des maillons dans leurs parties évidées correspondant à celles des réalisations antérieures connues, accroît encore la résistance de la chenille.

Les moyens d'articulations en caoutchouc ou matériau élastomère équivalent peuvent être dimensionnés sans avoir à se préocuper des contraintes de géométrie imposées dans les réalisations connues et, en particulier, peuvent être calculés pour la transmission des efforts de tension (radiale) ou de réaction latérale (axiale) de la chenille et les débattements en rotation nécessaires au contournement de barbotin, des poulies de renvoi et/ou des galets de l'ensemble moteur du véhicule équipé d'une telle chenille.

En outre, les chocs dûs à l'engrènement des connecteurs sur le barbotin sont amortis et filtrés dans les connecteurs, et ainsi à l'origine même des vibrations qui sont réduites d'autant dans le véhicule civil ou militaire équipé des chenilles perfectionnées selon l'invention.

On se réfère maintenant aux figures 3 à 5 qui illustrent une forme de réalisation préférée d'un connecteur élastique articulé de chenille perfectionnée selon l'invention. Dans cette réalisation, chaque connecteur extérieur 20 ou 21 est du type conique, -c'est-à-dire constitué par des blocs de caoutchouc ou élastomère analogue conformés non pas suivant des cylindres mais suivant des troncs de cônes à génératrices inclinées sur la direction des axes d'assemblage ou en variante sur les parties en saillie d'une pièce avec les maillons 10 lorsque de tels axes ne sont pas présents-, et est constitué par l'assemblage à symétrie de miroir de deux demi-connecteurs 35 et 36. Ceux-ci sont réunis par des brides tubulaires 37 et 38 à section droite hexagonale et retours d'extrémités 39 et 40 propres à coopérer avec des épaulements 41 et 42, respectivement, de chacun des demi-connecteurs 35, 36, lesquels renferment, chacun, deux dispositifs d'articulations élastiques 43, 44, à blocs d'élastomère de forme générale tronconique, chaque bloc étant placé dans un évidement de forme conjuguée 45, 46 où il est moulé sous pré-contrainte.

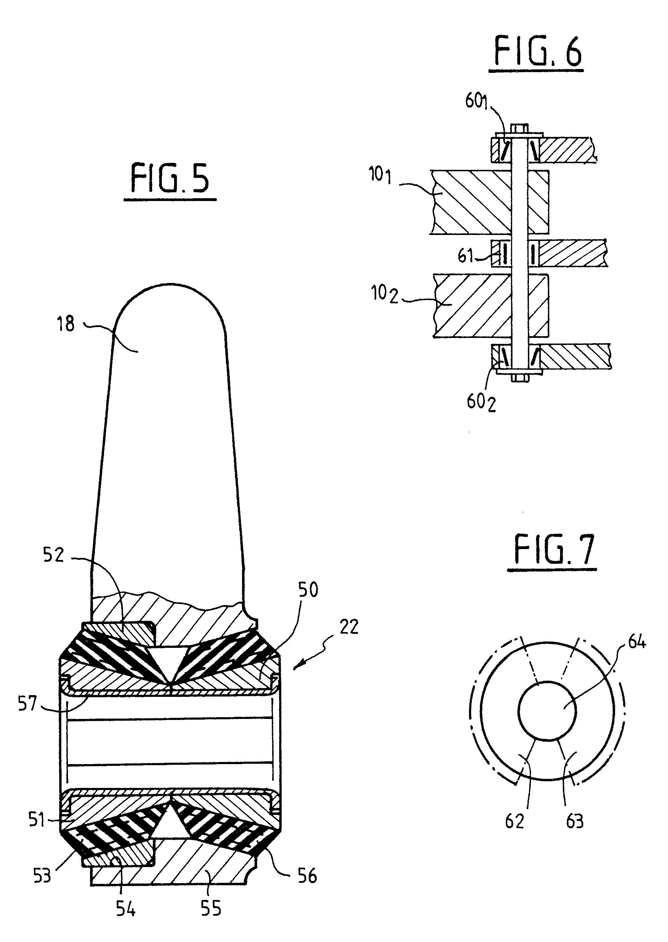

La structure du connecteur central 22, figure 5, est analogue à celle décrite ci-dessus sous réserve que l'une des parties moulées constitutives du connecteur, par exemple celle montrée en 50 sur la partie droite de la figure, porte la dent d'engrenage 18, alors que l'autre, montrée en 51, est munie d'un anneau 52 qui enferme un bloc tronconique de caoutchouc ou matériau élastomère analogue 53. Dans la condition d'assemblage à l'aide d'une bride ou frette 57, analogue à la bride 37 prévue pour les connecteurs latéraux extérieurs, l'anneau 52 est logé dans un lamage correspondant 54 du corps 55 de la partie 50 enfermant un second bloc tronconique 56 de caoutchouc ou matériau élastomère analogue, avantageusement lamifié et d'inclinaison opposée à celle du bloc 53. Des moyens de maintien analogues à la plaque ou rondelle 32 ne sont pas prévus pour le connecteur central étant donné, en tout état de cause, que ledit connecteur est maintenu entre les maillons adjacents $10_1$ et $10_2$ de la chenille.

Aussi bien pour la réalisation des connecteurs extérieurs que du connecteur central, l'invention prévoit un moulage des pièces de caoutchouc ou matériau élastomère analogue qui impose auxdites pièces une pré-contrainte, laquelle s'oppose alors à un travail en traction du matériau mis en oeuvre.

De façon avantageuse, et préférée, les blocs de caoutchouc ou matériau élastomère analogue sont à structure lamifiée, c'est-à-dire à couches coaxiales alternées de matériau élastomère et d'armature de renfort, par exemple de métal comme de l'acier.

Dans une autre forme de réalisation, montrée schématiquement sur la figure 6, l'invention prévoit d'associer à deux maillons $10_1$ et $10_2$ un système de connecteurs élastiques articulés dans lequel les connecteurs latéraux $60_1$ et $60_2$ sont du type conique, à blocs de caoutchouc ou matériau élastomère analogue lamifié, et à connecteur central 61 cylindrique, lui aussi avantageusement lamifié. Une telle réalisation, plus simple que celle décrite en référence aux figures 3 à 5, permet également la reprise des efforts latéraux et bénéficie des avantages associés à une telle solution, notamment l'élimination des mouvements transversaux relatifs maillons/connecteurs lesquels conduisent à une usure et une dégradation rapide de la chenille, en particulier lorsque les maillons sont en aluminium et les connecteurs en acier. Dans cette réalisation, toutefois, et contrairement aux réalisations décrites précédemment, la mise en pré-contrainte est effectuée lors du montage de la chenille, par serrage des moyens d'assemblage.

Dans la variante montrée schématiquement sur la figure 7, les blocs de caoutchouc ou matériau élastomère analogue 62 et 63 ne règnent pas sur la totalité de la circonférence de l'axe 64 mais sont conformés, en section droite, suivant des parties de couronnes d'ouverture angulaire prédéterminée dont la condition avant montage est celle montrée en trait mixte et celle après montage montrée en trait plein, le passage de l'une à l'autre procurant la pré-contrainte souhaitée.

Dans une telle réalisation, l'articulation présente une rigidité radiale hétérogène, laquelle est avantageusement choisie pour être importante suivant l'axe de la chenille et limiter les variations de longueur de celle-ci lorsque l'effort de tension change en cours de fonctionnement, tandis que la rigidité suivant une direction orthogonale à la chenille est plus faible pour diminuer les efforts induits lors du passage des galets sur les connecteurs lors du franchissement d'un obstacle.

De bons résultats ont été obtenus, pour une structure à connecteurs extérieurs d'une épaisseur d'environ 65 mm, une longueur d'environ 150 mm et une hauteur d'environ 80 mm, avec une réalisation du type illustré sur les figures 3 à 5, à articulations à quatre couches d'élastomère, laquelle permet d'obtenir une durée de vie des connecteurs qui est celle requise pour la chenille, à savoir de l'ordre de 10 à 12 000 km soit environ six fois la durée de vie des systèmes antérieurs connus.

## Revendications

1. Dispositif de connecteur élastique articulé pour chenille de véhicule, caractérisé en ce que les moyens d'articulation élastiques (25, 26, 27, 28, 29 ; 43, 44 ; 53, 56 ; 60, 61, 62, 63) des maillons ($10_1$ et $10_2$) de la chenille sont disposés dans les connecteurs (20, 21, 22).

2. Dispositif de connecteur élastique articulé suivant la revendication 1, caractérisé en ce que les articulations (43, 44 ; 53, 56) sont du type conique, c'est-à-dire ménagées par des blocs (43, 44 ; 53, 56) de caoutchouc ou matériau élastomère analogue de forme générale tronconique.

3. Dispositif de connecteur élastique articulé suivant la revendication 2, caractérisé en ce que les blocs de caoutchouc ou matériau élastomère analogue sont à structure lamifiée, c'est-à-dire à alternance de couches de caoutchouc ou élastomère et d'armatures de renfort, avantageusement métalliques.

4. Dispositif de connecteur élastique articulé suivant la revendication 2, caractérisé en ce qu'il est formé par la réunion de deux parties (35, 36; 50, 51), comportant chacune une articulation du type conique et liées entre elles par des moyens de bride ou frette (37, 38, 57), les deux parties étant disposées à symétrie de miroir l'une par rapport à l'autre.

5. Dispositif de connecteur élastique articulé suivant l'une quelconque des revendications précédentes, caractérisé en ce que l'articulation en caoutchouc ou matériau élastomère analogue (25, 26, 27, 28, 29 ; 43, 44 ; 53, 56 ; 60, 61, 62, 63) est pré-contrainte de construction même.

6. Dispositif de connecteur élastique articulé selon l'une quelconque des revendications précédentes, caractérisé en ce qu'il comprend des moyens (32, 33) destinés à s'opposer à la désolidarisation du connecteur et des maillons (10) en cas de rupture ou d'endommagement des articulations en caoutchouc ou matériau élastomère analogue.

7. Dispositif de connecteur élastique articulé selon la revendication 1, caractérisé en ce qu'il comprend deux articulations élastiques d'extrémités coniques ($60_1$, $60_2$) et une articulation élastique centrale cylindrique (61), ainsi que des moyens pour la mise en pré-contrainte desdites articulations par serrage lors de son montage.

8. Dispositif de connecteur élastique articulé selon la revendication 1, caractérisé en ce que il présente une rigidité radiale hétérogène.

9. Dispositif de connecteur élastique articulé selon la revendication 8, caractérisé en ce que ladite rigidité radiale hétérogène est obtenue par des blocs de caoutchouc ou matériau élastomère analogue (62, 63) régnant sur une partie seulement de l'envergure angulaire des axes de maillons.

10. Chenille pour véhicule ou engin à moteur, à usage civil ou militaire, notamment pour char de combat, caractérisé en ce que ses maillons (10) sont assemblés entre eux à l'aide d'un connecteur élastique articulé selon l'une quelconque des revendications 1 à 9.

11. Chenille selon la revendication 10, caractérisée en ce que l'assemblage a lieu à l'aide de saillies formant des excroissances venues d'une pièce avec les maillons de la chenille, et ainsi sans axes indépendants.

## FIG.1

## FIG.2

EP 0 319 367 A1

## FIG. 3

20, 21

4          4

33

32                              40
                         44

## FIG. 4

10    14

37
41  39   38         44

43

35

36                              46

20,21

33        32    42  40

EP 0 319 367 A1

FIG. 6

FIG. 5

FIG. 7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X,D | US-A-2 113 018 (D. FERGUSSON)<br>* Figures 3-5,9-11; page 1, colonne de droite, ligne 48 - page 2, colonne de gauche, lignes 18,48 - colonne de droite, ligne 34; page 3, colonne de gauche, lignes 2-10,43 - colonne de droite, ligne 2 * | 1,10 | B 62 D 55/21<br>B 62 D 55/205 |
| A | | 6 | |
| A,D | DE-C- 719 862 (C.F.W. BORGWARD)<br>* Figures 2,3; page 2, colonne de gauche, lignes 15-35 * | 2,4 | |
| A | DE-A-2 400 481 (FA. DIEHL)<br>* Figures 2a,2b; page 5, paragraphe 1 * | 1,10 | |
| A,D | US-A-2 186 978 (H.A. KNOX)<br>* Figures 1,3; page 1, colonne de gauche, ligne 33 - colonne de droite, ligne 31 * | 1,10 | |

DOMAINES TECHNIQUES RECHERCHES (Int. Cl.4)

B 62 D
F 41 H

Le présent rapport a été établi pour toutes les revendications

| Lieu de la recherche | Date d'achèvement de la recherche | Examinateur |
|---|---|---|
| LA HAYE | 17-02-1989 | CHLOSTA P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.............................................................................

& : membre de la même famille, document correspondant

EPO FORM 1503 03.82 (P0402)